# EUROPÄISCHE PATENTSCHRIFT

(11) **EP 1 488 143 B1**
(45) Veröffentlichungstag und Bekanntmachung des Hinweises auf die Patenterteilung: **22.02.2012**
(21) Anmeldenummer: 03720242.1
(22) Anmeldetag: 26.03.2003
(51) Int. Cl.: F16J 15/32, B23Q 11/08, B23B 19/02

(54) **Motorspindel**
Motor spindel
Broche motorisée

(30) Priorität: 26.03.2002 DE 10213530
(43) Veröffentlichungstag der Anmeldung: 22.12.2004
(73) Patentinhaber: SIEMENS AKTIENGESELLSCHAFT, 80333 München (DE)
(72) Erfinder: GEBERT, Karl, 97340 Marktbreit (DE)
(86) Internationale Anmeldenummer: PCT/DE2003/001008
(87) Internationale Veröffentlichungsnummer: WO 2003/081095

(56) Entgegenhaltungen:
- WO-A-01/13013
- DE-A- 19 750 205
- DE-C- 664 770

## Beschreibung

Die vorliegende Erfindung betrifft eine Motorspindel mit einer drehbaren Welle, durch die Schmiermittel transportierbar ist, und mit einer Vorrichtung zur Übergabe des Schmiermittels, umfassend eine Medienzufuhreinrichtung, mit der das Schmiermittel der Welle zuführbar ist, und eine Dichtungseinrichtung zur Vermeidung einer Leckage bei der Übergabe des Schmiermitteln in die Welle.

Werkzeugspindeln werden häufig bei hohen Drehzahlen eingesetzt, um beispielsweise mit kleinen Werkzeugen ausreichend hohe Schnittgeschwindigkeiten realisieren zu können. Hierzu werden die eingesetzten Spindeln üblicherweise ölgeschmiert. Häufig ist es unerheblich, wenn aus den Spindellagern Öl austritt. Bei einigen Anwendungen in der Holzindustrie, bei der Zerspanung von Graphit und anderen ölempfindlichen Werkstoffen sowie beim Fräsen von vorbehandelten oder endfertigen Werkstücken besteht jedoch die Forderungen, dass keine Fluide aus der Spindel austreten, da diese das Werkstück verschmutzen, schädigen oder unbrauchbar machen könnten. Aus diesem Grund werden bei Werkzeugspindeln Hauptdichtungen eingesetzt, die sicherstellen sollen, dass kein Öl aus der Spindel austritt. Gängigerweise sind die Hauptdichtungen jedoch als nicht ganz leckagefreie Labyrinthdichtungen ausgeführt. Derartige Labyrinthdichtungen besitzen ferner verhältnismäßig große axiale Abmessungen, so dass daraus ein entsprechend langer Kragarm zwischen der Werkzeugspitze und dem ersten arbeitsseitigen Lager resultiert, und die dynamischen Eigenschaften der Spindel darunter leiden.

Bei Motorspindeln besteht darüber hinaus der Bedarf nach sogenannten Dreheinführungen, um beispielsweise in eine sich drehende Werkzeugspindel ein Schmiermedium einzuführen, das bis zum eingesetzten Werkzeug transportiert werden kann. Als Abdichtungen für derartige Dreheinführungen werden üblicherweise keramische Dichtsätze verwendet. Diese haben jedoch insbesondere bei hohen Drehzahlen den Nachteil einer geringen Lebensdauer.

Aus der Patentschrift DE 664 770 C ist eine Spindelvorrichtung mit einem Bürstenring zum Verhindern des Eindringens von Spänen bekannt. Der Bürstenring gewährleistet ein restloses Abstreifen aller Späneteile unter größtmöglicher Schonung der Bohrspindel.

Des Weiteren offenbart die Druckschrift DE 197 50 205 A1 ein abgedichtetes Wälzlager. Bei dem Wälzlager ist ein die Wälzkörper aufnehmender Raum nach außen mit Hilfe einer Bürstendichtung abgedichtet. Innerhalb des Lagers sind Zuführungsbohrungen für Sperrluft vorhanden, so dass die zugeführte Sperrluft über einen von den beabstandeten Stirnflächen des Lagers und einer Anschlusskonstruktion gebildeten Spalt in radialer Richtung nach außen durch die Bürstendichtung hindurch austreten kann. Durch die zugeführte Sperrluft wird erreicht, dass auf der Bürstendichtung sich absetzende Schmutzpartikel nach außen weggeblasen werden.

Ferner ist in der Druckschrift WO 01/13013 A1 eine Bürstendichtung für relativ zueinander bewegliche Bauteile beschrieben. Sie besitzt ein ringförmiges Gehäuse sowie eine Vielzahl von in diesem befestigten, radial oder axial aus der Gehäusekontur vorstehenden Borsten auf der Basis von Aramidfasern. Die abzudichtenden Medien sind bevorzugt gasförmig.

Die Aufgabe der vorliegenden Erfindung besteht darin, eine **Motorspindel, die** eine Vorrichtung zur Medienübergabe **aufweist,** mit verbesserter Dichtung vorzuschlagen.

Erfindungsgemäß wird diese Aufgabe gelöst durch eine **Motorspindel** nach **Anspruch 1**.

**Bei** der Verwendung in Hauptdichtungen von Spindeln, haben die Bürstendichtungen den Vorteil, dass sie vor allem die gewünschte Dichtheit gewährleisten und sich axial kürzer ausführen lassen als die gängigen Labyrinthdichtungen. Dadurch kann ein kürzerer Kragarm zwischen der Werkzeugspitze und dem ersten arbeitsseitigen Lager erzielt werden, wodurch die dynamischen Eigenschaften der Spindel positiv beeinflusst werden.

Werden die erfindungsgemäßen Spindeln für Werkzeugspindeln eingesetzt, so können vorteilhafterweise auch Materialien bearbeitet werden, die gegenüber den Schmiermitteln empfindlich sind.

Günstigerweise gewährleisten die Bürstendichtungen eine angemessene Dichtwirkung auch gegen Medien und Partikel, die von außen nicht ins Spindelinnere gelangen sollten. Damit können auch die Anforderungen an hochwertige Hauptdichtungen bei Werkzeugspindeln erfüllt werden.

Hinsichtlich der Drehdurchführungen ist festzustellen, dass mit Hilfe der Bürstendichtungen die leckfreie Übertragung von flüssigen und gasförmigen Medien in die rotierende Welle vereinfacht beziehungsweise verbessert wird.

Die vorliegende Erfindung wird nun anhand der beiliegenden Zeichnungen näher erläutert, in denen zeigen:
- FIG 1: eine Querschnittsteilansicht durch einen Spindelkopf einer erfindungsgemäß abgedichteten Werkzeugspindel;
- FIG 2: eine Detailansicht einer Bürstendichtung und
- FIG 3: eine Teilquerschnittsansicht durch eine Drehdurchführung einer Werkzeugspindel gemäß der Erfindung.

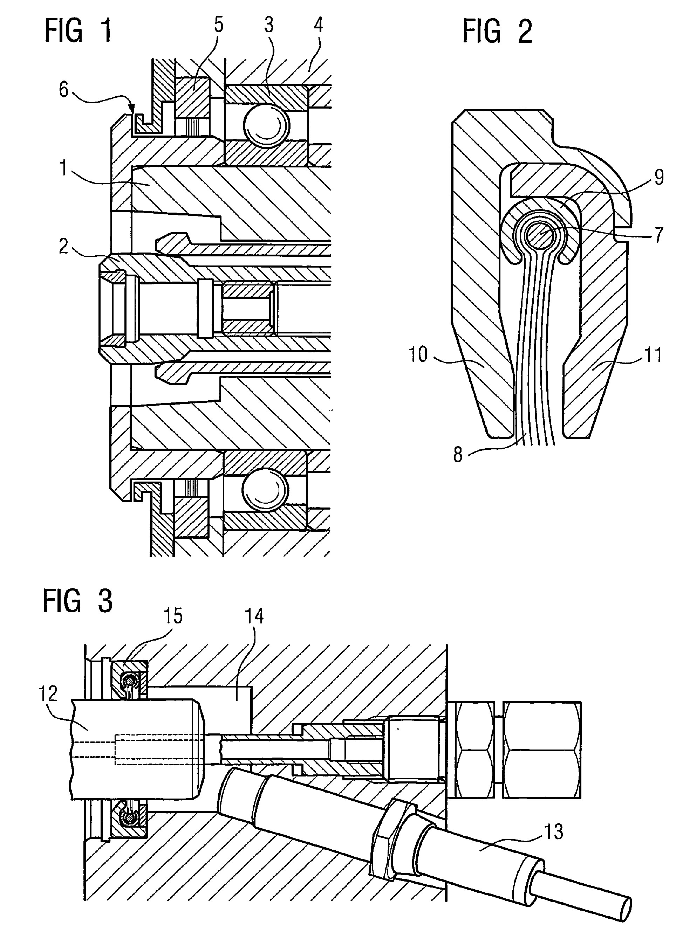

Eine Werkzeugspindel 1 mit zentraler Werkzeugaufnahme 2 ist mit einem Lager 3 in einem Gehäuse 4 drehbar gelagert. Zur Verbesserung der Laufeigenschaften des Lagers wird dieses mit einem Öl geschmiert. Damit das Öl nicht an der werkzeugseitigen Stirnseite der Spindel 1 nach außen tritt, ist eine Hauptdichtung in Form einer Bürstendichtung 5 vorgesehen. Sie dichtet das Gehäuse gegenüber der sich drehenden Spindel 1 ab. Außerdem dichtet sie auch das Lager 3 gegenüber Medien und Partikeln ab, die von außen eindringen würden. In dem Ausführungsbeispiel von FIG 1 ist die Bürstendichtung 5 durch eine einfache Labyrinthdichtung 6 ergänzt.

In FIG 2 ist eine Bürstendichtung im Detail dargestellt. Um einen Stahlring 7 sind die Bürstendrähte 8 in Form von Keflarfasern oder Stahlborsten geformt. Die Bürstendrähte 8 sind mit einem Bördelring 9 auf dem Stahlring 7 fixiert. Die Bürstendichtung ist in einer ringförmigen Ummantelung bestehend aus einem Stützring 10 und einem Deckring 11 untergebracht.

Für das Bürstenmaterial und die Materialien der weiteren Komponenten der Bürstendichtung ist eine geeignete Wahl zu treffen, um einen gewünschten Dichtspalt im Betrieb zu erzielen. Neben der Materialwahl ist auch die Dimensionierung der Komponenten der Bürstendichtung an das Schmiermedium, die auftretenden Drücke und Temperaturen und dergleichen anzupassen.

In FIG 3 ist schließlich der Einsatz einer derartigen Bürstendichtung in einer Teilschnittansicht einer Drehdurchführung gemäß der Erfindung dargestellt. In eine drehbare, hohle Welle 12, insbesondere eine Spindel, soll beispielsweise ein Schmieröl für ein Werkzeug eingebracht werden. Hierzu wird eine Medienzufuhreinrichtung 13 verwendet. Mit deren Hilfe ist das Medium beziehungsweise Schmiermittel in einen Übertragungsraum 14, der mit der Bohrung der Welle unmittelbar in Verbindung steht, befüllbar. Damit das Medium den Übertragungsraum 14 nicht undefiniert, sondern lediglich durch die Bohrung der Welle 12 verlässt, ist eine Bürstendichtung 15 ringförmig um die sich drehende Welle 12 vorgesehen.

Mit einer derartigen Bürstendichtung 15 sind nun flüssige und gasförmige Medien in die rotierende Welle übertragbar, wobei ohne Weiteres Verlagerungen der Welle 12 in axialer Richtung sowie Schwingungen in allen Raumrichtungen auftreten können, da die Bürstendichtung 15 entsprechend unempfindlich ist. Weiterhin ist die Bürstendichtung 15 nass- und trockenlaufgeeignet. Ferner kann eine Medienübergabe bei extrem hohen Drehzahlen mit Umlaufgeschwindigkeiten bis etwa 400 m/s erfolgen.

Die Bürstendichtung hat außerdem den Vorteil, dass keine plötzliche Zerstörung und damit in aller Regel auch kein unkontrollierter Austritt des zu übertragenden Mediums auftritt. Verglichen mit den üblichen Keramikdichtungen ergibt sich eine Erhöhung der Lebensdauer um durchschnittlich den Faktor 5 bis 10.

Die Drehdurchführung beziehungsweise Übergabestelle besitzt einen sehr einfachen Aufbau, da keine zusätzlichen Komponenten wie Lager etc. erforderlich sind. Damit lässt sich eine Reduzierung der Komponenten und folglich eine Verminderung der Systemkosten erreichen.

## Patentansprüche

1. Motorspindel mit
- einer eine Bohrung aufweisenden drehbaren Welle (12), durch die Schmiermittel zu einem Werkzeug transportierbar ist, und
- einer Vorrichtung zur Übergabe des Schmiermittels, umfassend
- einen Übertragungsraum (14), der mit der Bohrung der Welle unmittelbar in Verbindung steht,
- eine Medienzufuhreinrichtung (13), mit der das Schmiermittel in den Übertragungsraum (14) füllbar ist, und
- eine Dichtungseinrichtung (15), die eine Bürstendichtung umfasst, wobei
- die Dichtungseinrichtung (15) gewährleistet, dass das Schmiermittel den Übertragungsraum lediglich durch die Bohrung der Welle (12) verlässt*,* indem die Bürstendichtung (15) ringförmig um die drehbare Welle (12) vorgesehen ist.

2. Vorrichtung nach Anspruch **1**, wobei die Bürstendichtung Keflarfasern oder Stahlborsten umfasst.

## Claims

1. Motor spindle comprising
- a rotatable shaft (12) having a borehole and enabling lubricant to be conveyed therethrough to a tool, and
- a device for transferring the lubricant, the device comprising
- a transfer chamber (14) which is directly connected to the borehole of the shaft,
- a medium feed device (13) by means of which the transfer chamber (14) can be filled with the lubricant, and
- a sealing assembly (15) which includes a brush seal, wherein
- the sealing assembly (15) ensures that the lubricant leaves the transfer chamber exclusively through the borehole of the shaft (12) in that the brush seal (15) is provided in a ring shape encircling the rotatable shaft (12).

2. Device according to claim 1, wherein the brush seal comprises Kevlar fibres or steel bristles.

## Revendications

1. Broche motorisée comprenant
- un arbre (12) tournant, ayant un trou et dans lequel du lubrifiant peut être transporté vers un outil, et
- un dispositif de transfert du lubrifiant, comprenant
- une chambre (14) de transfert qui est en communication directe avec le trou de l'arbre,
- un dispositif (13) d'apport de fluide, par lequel la chambre (14) de transfert peut être remplie de lubrifiant, et
- un dispositif (15) d'étanchéité qui comprend une étanchéité par brosse,
- le dispositif (15) d'étanchéité assurant que le lubrifiant quitte la chambre de transfert seulement par le trou de l'arbre (12) par le fait que l'étanchéité (15) par brosse est prévue annulairement autour de l'arbre (12) tournant.

2. Dispositif suivant la revendication 1,
dans lequel l'étanchéité par brosse comprend des fibres en kevlar ou des soies d'acier.
